# EUROPEAN PATENT SPECIFICATION

(11) **EP 2 628 993 B1**
(45) Date of publication and mention of the grant of the patent: **21.10.2015**
(21) Application number: 13154246.6
(22) Date of filing: 06.02.2013
(51) Int. Cl.: F16P 3/14, B23Q 1/66, B23Q 11/00

(54) **Machining apparatus**
Bearbeitungsvorrichtung
Appareil d'usinage

(30) Priority: 15.02.2012 IT MO20120033
(43) Date of publication of application: 21.08.2013
(73) Proprietor: SCM Group S.p.A., 47900 Rimini (IT)
(72) Inventor: Ratti, Federico, 47922 Viserba di Rimini (Rimini) (IT)
(74) Representative: Villanova, Massimo

(56) References cited:
- EP-A1- 2 354 624
- DE-U1-202009 007 035
- US-A1- 2002 017 178
- US-A1- 2007 045 250

## Description

### Background of the invention

The invention relates to a machining apparatus, in particular for machining workpieces made of wood or a material similar to wood.

In particular, reference is made to an apparatus having a safety device to prevent moving parts of the apparatus knocking against an operator.

Specifically, but not exclusively, the machining apparatus comprises a numerically controlled machining centre provided with at least one movable operating head, such as, for example, a multifunction machining centre (drilling, milling, etc) for machining panels.

Known machining apparatuses, for machining workpieces made of wood or a material similar to wood, are generally provided with a safety device to reduce the risk of accidents due to the impact of movable elements of the machine against the operator.

Safety devices are for example known in which the movable parts (operating head, upright, etc) of the machining centre are covered by a bumper, which is generally soft, provided with a system of sensors that stops the machine in the event of contact with an obstacle. Nevertheless, these safety devices do not ensure absolute operator safety due to the high speeds of the movable part.

Safety devices are also known in which a system of sensors detects the presence and/or the access of an operator in at least a set machining zone and reports this presence/access to the machining centre, that stops the operating head if there's a risk for the operator. This known system of sensors can comprise, for example, a mat that is sensitive to the weight of the operator, or a series of photocells. Nevertheless, this second type of safety device, in addition to being more complicated and expensive than the first, entails the need to set up machines of significant length so that between the operator, who is engaged in a machining zone, and the movable part of the machine operating at the same time in another zone there is an appropriate safety distance. The operator is further obliged not to leave set operating zones and must therefore exercise extreme caution in this respect. Further, the operator is generally prohibited from conducting close inspection of the workpieces being machined.

A safety device is known that has a rotating laser used to identify the presence of an object in a given machining area. This known device does not only have a high cost but is subject to generating false signals, in particular because of the great sensitivity to dust/chippings of the laser sensors. Patent publication DE 202009007035 U shows an other example of a safety device.

Patent publication EP 2354624 shows a safety device having a bumper arranged on a movable element and a series of photocells that detect the presence of an operator in a machining zone.

Patent publication EP 1918629 shows a machining apparatus, provided with a safety device, made according to the preamble of the first claim. The apparatus of EP 1918629 stops when a contact sensor detects contact with the operator. A risk therefore remains of the operator coming into contact with a movable part of the apparatus.

### Summary of the invention

One object of the invention is to devise a machining apparatus that is able to overcome the aforesaid limits and drawbacks of the prior art.

One advantage is to ensure the safety of the operator of a workpiece machining apparatus provided with at least one movable member that must not come into contact with the body of the operator.

One advantage is to ensure a relatively high operating speed of the machining apparatus.

One advantage is to avoid the risk of contacts of the operator with movable apparatus parts.

One advantage is to be able to conduct a close inspection of the workpieces being machined.

Such objects and advantages and still others are all achieved by the apparatus and by the method according to any one of the claims set out below.

In one example, the machining apparatus, for machining workpieces made of wood or a material similar to wood, comprises a protection device, for the safety of an operator, having magnetic field generating means, antenna sensor means arranged on a movable part of the apparatus to detect the distortion of the magnetic field caused by the nearness of the operator, and control means for stopping the apparatus on the basis of a signal received by said sensor means before contact between the operator and the moving part.

### Brief description of the drawings

The invention can be better understood and implemented with reference to the attached drawings that illustrate embodiments thereof by way of non-limiting example.

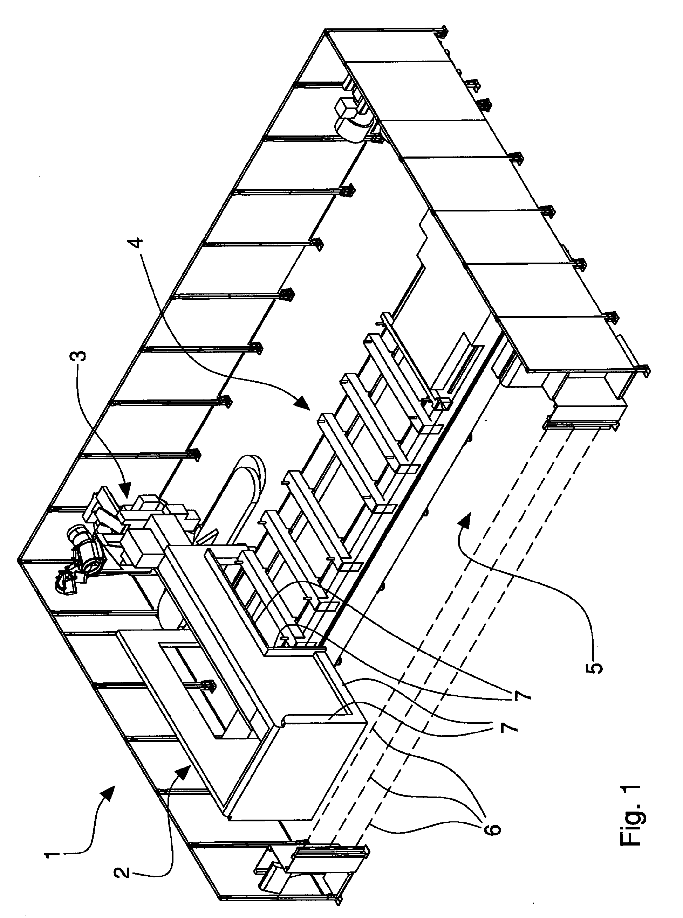

Figure 1 is a perspective view of one example of an apparatus made according to the invention.

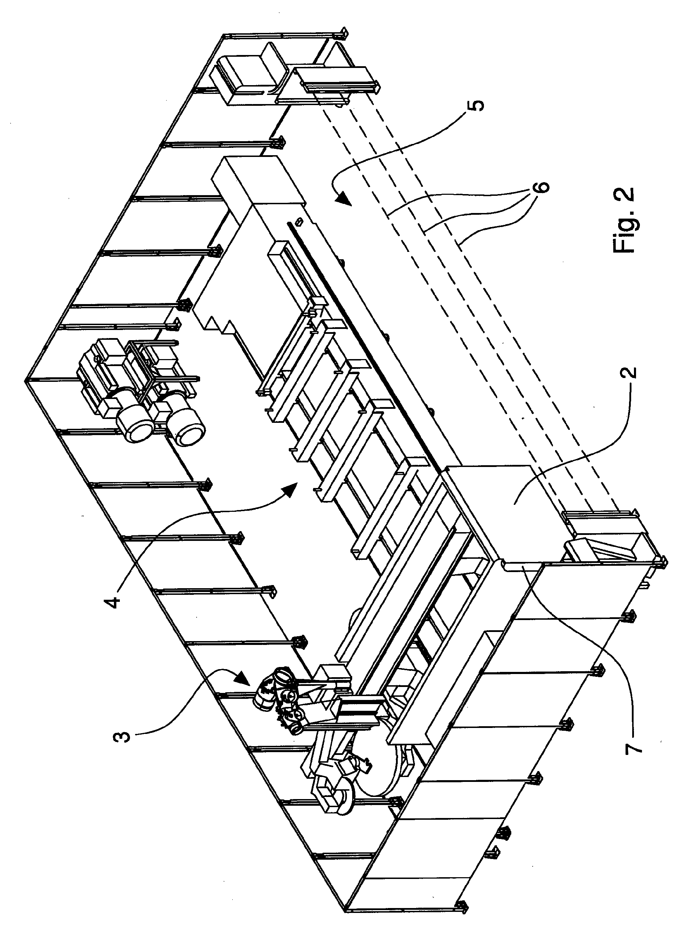

Figure 2 is a view of the apparatus in figure 1 according to a different perspective.

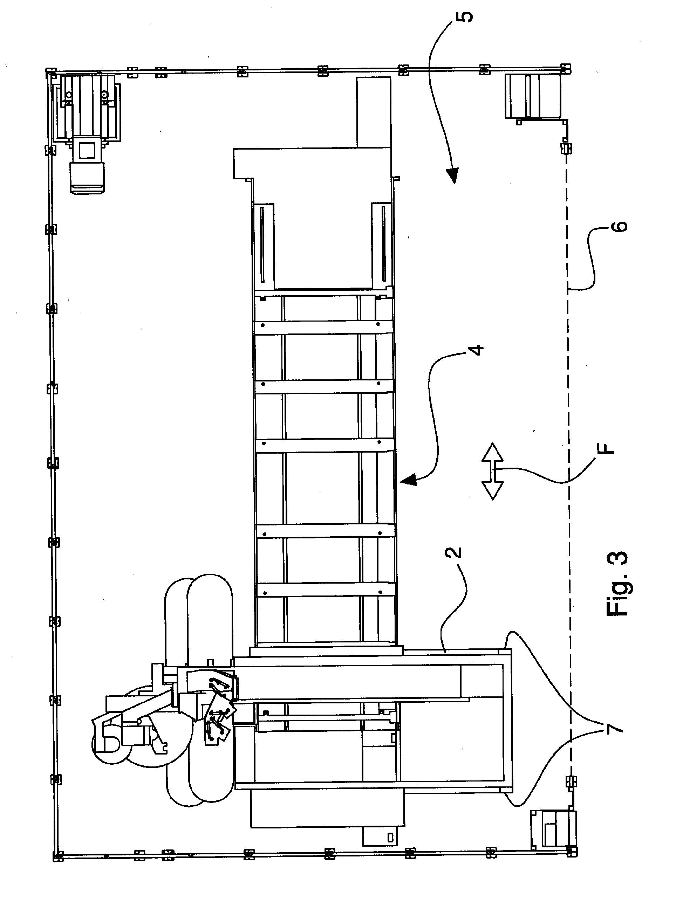

Figure 3 is a is a top plan view of the apparatus in figure 1.

### Detailed description

With reference to the aforesaid figures, overall with 1 a machining apparatus for machining workpieces made of wood or a material similar to wood has been indicated. In particular, the machining apparatus comprises a numerically controlled machining centre (for example of multifunction type) for machining workpieces, for example in panel shape.

The machining apparatus 1 comprises at least one movable support 2 having the possibility of performing movements according to one or more movement axes (for example according to a horizontal movement axis). The movable support 2 may be set up, for example, for supporting a workpiece machining unit 3, in particular an operating unit (for example of known type) configured in a known manner (for example by using at least one spindle) to perform one or more actions on a workpiece, for example for milling, for drilling, etc. The machining unit 3 may be configured for performing movements in relation to the movable support 2, for example rotations according to one or more rotation and/or movement axes in one or more movement axes (for example according to a vertical axis and/or a horizontal axis perpendicular to the movement axis of the movable support 2).

The apparatus 1 may further comprise at least one workpiece supporting device, which may comprise, as in this case, a supporting plane 4 (of known type) for supporting a workpiece (for example a panel). The (horizontal) supporting plane 4 will be provided with means (of known type) for locking the workpiece in position. In the specific case the supporting plane 4 comprises a plurality of crosspieces, that are parallel to one another, on which the workpiece can be rested. The workpiece supporting device may be movable to enable the workpiece to move, for example with respect to the operating unit 3.

The machining apparatus comprises first sensor means to detect the presence and/or the access of an object in at least one set machining area 5 of the machining apparatus. The first sensor means may comprise, as in this case, a series of photocells set up for transmitting and receiving radiation beams 6, in particular at the inlet of the machining area.

The machining apparatus comprises second sensor means arranged for detecting the nearness of an object to the movable support 2 of the machining apparatus.

The second sensor means comprises contactless sensor means. In the specific case the second sensor means comprises magnetic proximity sensor means. It is possible to provide the use of ultrasonic proximity sensor means.

The second magnetic sensor means is operationally associated with magnetic field generating means arranged on the machining apparatus for the operation of the magnetic sensor means, which are configured for detecting a disturbance to a magnetic field generated by the generating means, this disturbance being determined by an object (for example an operator) situated at a distance from the second sensor means. The magnetic field generating means may be arranged on the movable element, or on another movable apparatus part, or also on a fixed apparatus part.

In particular the magnetic sensor means comprises antenna means arranged on the movable support. In the specific case the antenna means comprises at least one element 7 (for example in the shape of a band or ribbon or lamina), made of metal (for example aluminium), applied (for example by adhesive) to a surface (for example external) of the movable support 2.

The antenna means may be arranged on a corner (vertical and/or horizontal) of the movable support or near the aforesaid corner. In the specific case the antenna means is arranged on at least one side of the movable support arranged frontally, with reference to the movement direction F of the element.

The antenna means comprises a first band (or ribbon or other element of elongated shape) arranged (vertically) on a frontal side of the movable support (adjacent to a vertical corner of the element) and/or a second ribbon arranged (vertically) on an opposite (rear) side of the movable support.

It is also possible to arrange other metal ribbons, acting as an antenna, extending in a horizontal direction, on the front and/or rear side.

The antenna means may be arranged, for example, on a bumper of the movable support.

The antenna means may be arranged on a non-metallic part of the movable support.

The second sensor means may be arranged on other movable parts of the machining apparatus.

The machining apparatus may further comprise a control system (for example a programmable electronic control unit) configured for moving the movable support 2 and/or the machining unit 3 at a reduced speed in response to a signal emitted by the first sensor means and for stopping the movable support 2 and/or the machining unit 3 in response to a signal emitted by the second sensor means.

Adopting ultrasonic sensor means is possible (alternatively or in addition to the magnetic sensor means) is possible, the ultrasonic sensor means being configured to emitting ultrasonic waves that intercepts an obstacle located nearby and sends a corresponding signal to the control system.

The control system implements a method for controlling the apparatus that comprises the steps of: moving at least a movable element at one movement speed; reducing the movement speed when the first sensor means detects an object in the machining area; and arresting the movable element when the second sensor means detects an object near the movable element.

The second sensor means is able to detect the object (then stopping the apparatus) before there is a contact between the object (for example the body of the operator) and the movable apparatus part.

The second sensor means may be able to determine, with a certain precision, the distance between the detected obstacle and the movable element on which it is arranged (similarly to a parking sensor in an automobile). The control system will be configured to stop the apparatus when the aforesaid distance (determined by the second sensor means) becomes less than a preset threshold value.

The second sensor means may be applied, for example, to a movable operating head of the apparatus.

The first sensor means may be arranged, as in the specific case, on a fixed part of the machining apparatus. The first sensor means may be, as in this case, contactless sensors. The first sensor means may comprise other types of sensor (of known type), such as, for example a mat that is sensitive to the weight of the operator located in the machining area.

The machining area may be, in particular, the area where there is a risk of a movable element of the apparatus knocking against the body of the operator.

## Claims

1. Machining apparatus for machining workpieces made of wood or a material similar to wood, said machining apparatus comprising:
- at least one workpiece machining unit (3) and at least one workpiece supporting device (4), at least one of which is movable;
- first sensor means (6) for detecting the presence and/or the access of an object in a work area (5) of said machining apparatus;
- second sensor means (7) arranged, at least partially, on a movable element of said apparatus for detecting contact and/or nearness of said movable element to the object;
- a control system configured for reducing speed of said movable element in response to a signal emitted by said first sensor means and for stopping said movable element in response to a signal emitted by said second sensor means;
**characterised in that** said second sensor means comprises contactless magnetic sensor means, wherein said magnetic sensor means comprises antenna means arranged on said movable element.

2. Apparatus according to claim 1, comprising magnetic field generating means, said magnetic sensor means being configured for detecting a disturbance caused by the object on a magnetic field generated by said generating means.

3. Apparatus according to claim 1 or 2, wherein said antenna means comprises at least one metallic elongated element (7), in the form of ribbon or lamina, applied to said movable element (2).

4. Apparatus according to any one of the preceding claims, wherein said antenna means is arranged on a corner of said movable element or near said corner.

5. Apparatus according to any one of the preceding claims, wherein said antenna means is arranged on one side of said movable element that is arranged frontally with reference to a movement direction (F) thereof.

6. Apparatus according to any one of the preceding claims, wherein said antenna means is arranged on a non-metallic part of said movable element.

7. Apparatus according to any one of the preceding claims, wherein said second sensor means is arranged on a support (2) of said workpiece machining unit (3), said support (2) being movable and said unit (3) being movable on said support (2).

8. Apparatus according to any one of the preceding claims, wherein said second sensor means comprises, in addition of said contactless magnetic sensor means, contactless ultrasonic sensor means.

9. Method of controlling a machining apparatus according to any preceding claim, comprising the steps of: moving a movable element of said apparatus at one movement speed; reducing the movement speed when said first sensor means detects an object in said work area; and stopping said movable element when said second sensor means detects an object near said movable element.

## Patentansprüche

1. Bearbeitungsvorrichtung zum Bearbeiten von Werkstücken, die aus Holz oder einem holzähnlichen Material hergestellt sind, die Bearbeitungsvorrichtung umfassend:
- zumindest eine Werkstückbearbeitungseinheit (3) und zumindest eine Werkstücktragevorrichtung (4), wobei zumindest eine davon beweglich ist;
- ein erstes Sensormittel (6) zum Erfassen des Vorhandenseins und/oder des Eintritts eines Objektes in einen Arbeitsbereich (5) der Bearbeitungsvorrichtung;
- ein zweites Sensormittel (7), das zumindest teilweise an einem beweglichen Element der Vorrichtung angeordnet ist, zum Erfassen eines Kontaktes und/oder eines Naheseins des beweglichen Elements zum Objekt;
- ein Steuerungssystem, das konfiguriert ist, zum Reduzieren einer Geschwindigkeit des beweglichen Elements in Antwort auf ein Signal, das von dem ersten Sensormittel emittiert worden ist, und zum Stoppen des beweglichen Elements in Antwort auf ein Signal, das durch das zweite Sensormittel emittiert worden ist;
**dadurch gekennzeichnet, dass** das zweite Sensormittel ein kontaktfreies, magnetisches Sensormittel umfasst, wobei das magnetische Sensormittel ein Antennenmittel umfasst, das an dem beweglichen Element angeordnet ist.

2. Vorrichtung nach Anspruch 1, umfassend ein Magnetfelderzeugermittel, wobei das Magnetfelderzeugermittel konfiguriert ist, zum Erfassen einer Störung, die durch das Objekt auf ein magnetisches Feld, das durch das Erzeugermittel erzeugt worden ist, verursacht worden ist.

3. Vorrichtung nach einem der Ansprüche 1 oder 2, wobei das Antennenmittel zumindest ein metallisches, längliches Element (7) in der Form eines Bands oder eines Blättchens umfasst, das auf das bewegliche Element (2) angebracht wird.

4. Vorrichtung nach einem der vorangehenden Ansprüche, wobei das Antennenmittel an einer Ecke des beweglichen Elements oder in der Nähe der Ecke angeordnet ist.

5. Vorrichtung nach einem der vorangehenden Ansprüche, wobei das Antennenmittel an einer Seite des beweglichen Elements angeordnet ist, stirnseitig ausgerichtet in Bezug zu einer Bewegungsrichtung (F) des Elements.

6. Vorrichtung nach einem der vorangehenden Ansprüche, wobei das Antennenmittel auf einem nichtmetallischen Teil des beweglichen Elements angeordnet ist.

7. Vorrichtung nach einem der vorangehenden Ansprüche, wobei das zweite Sensormittel auf einem Träger (2) der Werkstückbearbeitungseinheit (3) angeordnet ist, wobei der Träger (2) beweglich ist und die Einheit (3) beweglich auf dem Träger (3) ist.

8. Vorrichtung nach einem der vorangehenden Ansprüche, wobei das zweite Sensormittel zusätzlich zu dem kontaktfreien, magnetischen Sensormittel, ein Ultraschallsensormittel umfasst.

9. Verfahren zum Steuern einer Bearbeitungsvorrichtung nach einem der vorangehenden Ansprüche, umfassend die Schritte: Bewegen eines beweglichen Elements der Vorrichtung mit einer Bewegungsgeschwindigkeit; Reduzieren der Bewegungsgeschwindigkeit, wenn das erste Sensormittel ein Objekt in dem Arbeitsbereich erfasst; und Stoppen des beweglichen Elements, wenn das zweite Sensormittel ein Objekt in der Nähe des beweglichen Elements erfasst.

## Revendications

1. Appareil d'usinage pour l'usinage de pièces à usiner constituées de bois ou d'un matériau similaire au bois, ledit appareil d'usinage comprenant :
- au moins une unité d'usinage de pièce à usiner (3) et au moins un dispositif de support de pièce à usiner (4), au moins l'un de ceux-ci étant mobile ;
- des premiers moyens de capteur (6) pour détecter la présence et/ou l'entrée d'un objet dans une zone de travail (5) dudit appareil d'usinage ;
- des deuxièmes moyens de capteur (7) disposés, au moins en partie, sur un élément mobile dudit appareil pour détecter un contact et/ou une proximité dudit élément mobile avec l'objet ;
- un système de commande configuré pour réduire la vitesse dudit élément mobile en réponse à un signal émis par lesdits premiers moyens de capteur et pour immobiliser ledit élément mobile en réponse à un signal émis par lesdits deuxièmes moyens de capteur ;
**caractérisé en ce que** lesdits deuxièmes moyens de capteur comprennent des moyens de capteur magnétique sans contact, lesdits moyens de capteur magnétique comprenant des moyens d'antenne disposés sur ledit élément mobile.

2. Appareil selon la revendication 1, comprenant des moyens de génération d'un champ magnétique, lesdits moyens de capteur magnétique étant configurés pour détecter une perturbation provoquée par l'objet sur un champ magnétique produit par lesdits moyens de génération.

3. Appareil selon la revendication 1 ou 2, dans laquelle lesdits moyens d'antenne comprennent au moins un élément allongé métallique (7), sous la forme d'un ruban ou d'une feuille, appliqué audit élément mobile (2).

4. Appareil selon l'une quelconque des revendications précédentes, dans laquelle lesdits moyens d'antenne sont placés sur un coin dudit élément mobile ou à proximité dudit coin.

5. Appareil selon l'une quelconque des revendications précédentes, dans laquelle lesdits moyens d'antenne sont placés sur un côté dudit élément mobile qui est disposé de manière frontale en se référant à une direction de déplacement (F) de ce dernier.

6. Appareil selon l'une quelconque des revendications précédentes, dans laquelle lesdits moyens d'antenne sont placés sur une partie non métallique dudit élément mobile.

7. Appareil selon l'une quelconque des revendications précédentes, dans laquelle lesdits deuxièmes moyens de capteur sont placés sur un support (2) de ladite unité d'usinage de pièce à usiner (3), ledit support (2) étant mobile et ladite unité (3) étant mobile sur ledit support (2).

8. Appareil selon l'une quelconque des revendications précédentes, dans laquelle lesdits deuxièmes moyens de capteur comprennent, en plus desdits moyens de capteur magnétique sans contact, des moyens de capteur ultrasonore sans contact.

9. Procédé de commande d'un appareil d'usinage selon une quelconque revendication précédente, comprenant les étapes qui consistent à : déplacer un élément mobile dudit appareil à une certaine vitesse de déplacement ; réduire la vitesse de déplacement lorsque lesdits premiers moyens de capteur détectent qu'un objet est dans ladite zone de travail ; et immobiliser ledit élément mobile lorsque lesdits deuxièmes moyens de capteur détectent qu'un objet est à proximité dudit élément mobile.
